# EUROPEAN PATENT APPLICATION

(11) **EP 2 388 749 A1**
(43) Date of publication of application: **23.11.2011**
(21) Application number: 11164451.4
(22) Date of filing: 02.05.2011
(51) Int. Cl.: G06Q 30/00

(54) **Web system and method of providing personal gifts**

(30) Priority: 21.05.2010 US 784531
(71) Applicant: motiondrive AG, 92660 Neustadt a.d. Waldnaab (DE)
(72) Inventor: Krachtus, Werner, 92699, Bechtsrieth (DE)
(74) Representative: Lermer, Christoph

(57) **Abstract**

A web system 1 comprises a web platform 2, a commercial customer's user station 3, advertising targets' stations 40 and 41, and a product provider 5. The web platform 2 includes a voucher definition and order system 20, a voucher generation system 21, goods definition and order system 22, and a processing unit 23. A voucher is generated when a commercial user enters an order of vouchers in the commercial customer's user station 3. The order includes a definition of the goods which may be ordered by an advertisement target person when presenting the voucher.

## Description

### TECHNICAL FIELD

The application refers to a web system and a method of providing personal gifts, particularly business gifts and promotional gifts.

### BACKGROUND

It is common usage for business partners and companies to give business gifts or promotional gifts at particular opportunities, e. g. for Christmas or New Year. Furthermore, a company's advertising strategy may include distributing promotional articles to their customers, business partners or employees from time to time. Often, a company distributing promotional gifts orders one particular kind of article or a plurality of articles provided with a sign, e. g. a logo, which the receiver associates with the company or which is characteristic for the company. Anyway the article has an appearance which is "personal" or "individual" for the company. It is prepared for making reference to the company.

Furthermore, there are efforts to reward customers and to gain new customers by giving reward points or bonus points to them in case they purchase particular goods or spend a minimum amount of money. Bonus points may also be given as an incentive to employees or business partners.

In all these situations there is a large variety of articles which may be suitable as personal or individual gifts. Some typical items are ballpoint pens, calendars, food articles, office equipment, etc. The value of these articles is different. But usually there is a limitation of the value of a single promotional article due to the fact that a large number of articles are distributed at a time.

However, it can not be ignored that not all the articles distributed to the customers fulfil the expectations of the distributor, namely to be accepted and appreciated by the recipient. If the recipient has no use for the article he/she may dispose it. Therefore, for the sake of a successful strategy and a sufficiently high "yield" among recipients to appreciate and keep the article, the selection of articles by the company is very important. On the other hand, a selection of an article or a limited set of articles is difficult due to different individual preferences of each recipient.

Therefore, it is an object of the present invention to provide a web system and a method for increasing the success of a promotional campaign which includes distributing business gifts.

It is another object of the invention to provide a platform for business customers who would like to implement a reward point system or bonus point system with their customers or employees.

### SUMMARY OF THE INVENTION

A web system according to the invention comprises: a web platform; at least one customer station; a first connection between said web platform and said at least one customer station; a plurality of advertisement target stations; and a second connection between said web platform and said plurality of advertisement target stations; wherein said web platform includes a voucher definition and order system for receiving definition and order data for vouchers from said customer station, a voucher generation system for generating vouchers according to said definition and order data, a goods order system for receiving orders of goods from said advertisement target stations according to a voucher presented through said respective advertisement target station, and a processing unit for processing data provided by said voucher definition and order system and by said goods order system.

A method of providing personal gifts in a web system according to the invention comprisesthe steps: a) receiving a definition and an order data for vouchers in a voucher definition and order system; b) processing said definition and order data, and generating vouchers; c) sending said vouchers to respective advertising targets. d) receiving product orders by said advertising targets; and e) ordering products requested by the advertising targets from a goods provider.

The system according to the invention and the method according to the invention, respectively, allow carrying out successfully promotional campaigns which include distributing business gifts. The system and method according to the invention provide a comfortable platform for business customers (which may be any persons or organizations implementing a reward point system or distributing personal gifts to another group of persons/organizations) to order and distribute personal gifts.

Personal gifts or business gifts are any gifts which are made and produced according to order information provided by business customers. E. g. the gifts may be provided with a logo printed on the products which the receiver (advertising target) associates with the business customer.

The gifts may (or may not) be further personalised by an advertising target person who has received a voucher. After receiving a voucher the advertising target person may, when ordering a business gift according to the voucher, enter further information and preferences regarding the design of the business gift.

Advertising targets may be any group of persons and/or organisations selected by the business customer for receiving a voucher according to the invention. Advertising targets may be classified in different sub-groups receiving different vouchers, e. g. vouchers having different values or entitling for different business gifts. So the advertising targets may also be employees receiving a present as an incentive.

The system may also be regarded as an interface between a business customer and advertising targets. A business customer can easily and effectively implement a reward point system or an advertising campaign without having any administrational effort with respect to conversion of the vouchers, ordering of products, etc. The basic products (without any personal design characteristics) may be offered to the business customers in the inventive web system. A business customer may select suitable products and enter the design options to turn the product into a personalised or idividualised product, i. e. a product that makes reference to the business customer.

Particularly, it may be possible that an advertising target person enters additional design options for making the product quite individual. Thus it is likely that the articles distributed to the advertising targets are accepted and appreciated by the recipient.

It is preferred that the definition and order system is configured for receiving definitions of the kind of goods and the design of goods to be ordered through the goods order system upon presentation of a particular voucher.

The definition and order system may be configured for receiving definitions of design options with respect to goods to be ordered through the goods order system according to said respective voucher, wherein the design options may be selected by an advertisement target person when ordering through said goods order system.

Said design options may comprise entering through said advertisement target station individually selected images or text and personal images or text, respectively, through said goods order system.

Said goods order system may comprise a goods definition system, wherein through an advertisement target station goods definitions may be selected and determined, respectively, for ordering goods according to personal preferences of an advertisement target person.

The web system may further comprise at least one goods provider, wherein said goods provider provides goods ordered through said advertisement target stations. The goods provider may produce or finish the products defined and/or ordered by the advertisement target persons.

Said goods provider may be connected to said web platform via a third connection for receiving goods definition data and order data from said web platform.

Said web platform may provide a user accessible area for entering at least one of a number of vouchers to be ordered, advertising targets' data to be included in the vouchers, products, product designs, and design samples, for defining the goods to be obtained when converting the voucher.

The web platform may send a return confirmation of the order after having received the order in step a).

The method includes, when receiving product orders in step d), receiving a definition of at least an aspect of the design of the product according to the preference of the respective advertising target person.

Said definition may include uploading a text or a design to be imprinted in the product.

Ordering products in step e) may include providing data of advertising target persons required for sending the goods ordered by a respective advertising target person to the respective advertising target person.

It is preferred that the method includes a step f) producing the goods according to a respective advertising target's order and providing them to the respective advertising target.

The method may include a step g) invoicing of a customer having ordered the vouchers in step a).

The voucher may include at least a code that allows selection of particular goods and ordering of goods in accordance with the voucher.

Another method of providing personal gifts in a web system is provided, which may be used in connection or without the method described above. The method comprises the steps: providing a plurality of products in a web system; attributing a respective first value to each of said plurality of products; providing a voucher to a person, wherein said voucher has a second value; accessing said web system by said person; and selecting a set of products by said person, wherein said set of products has a third value which corresponds to the sum of first values of said products comprised in said selected set of products, wherein said third value is equal or smaller than said second value.

According to this aspect of the invention various kinds of business gifts or presents are provided in the web system, i. e. in an online platform which is accessible by the customers (users). For accessing the platform a user may enter a code which he/she had received as a present instead of an article. The voucher may be or comprise an access code to the web system or to a particular area of the web system. After accessing the web system the user may select and order a set of articles that he/she appreciates. Thus the acceptance of the business gifts is increased considerably. Consequently, the success of an advertising campaign is improved.

When providing particular areas in a web system, the choice of articles may be differentiated with respect to the users. A first group of users may have access to a first area offering a first plurality of articles, a second group of users may have access to a second plurality of articles. Besides, the second value of a voucher provided to a particular user may be set depending on the user, e. g. the attribution of the user to a particular group of customers.

The main functions of the voucher are i) providing access to the web system (area), and ii) indicating a value to be spent in the web system (area) by the user. There may be other functions like iii) including messages or greetings, iv) sending advertisement, etc.

Providing the gifts online has a further advantage that it is comfortable and easy for users to order gifts. Standard software used in online shops and having high security standards may be used. The user transmits a code provided to him as a voucher/present and accesses the web system. The voucher may be a written voucher or any virtual voucher provided e. g. in the form of an access code and having a link to the web system by e-mail. Afterwards, the user may select a set of products according to a maximum value set in his voucher. The user may be assured that his choice of products is kept confidential. If the user agrees his data may be used for other purposes, e. g. for composing a plurality of articles for the next presentation of gifts, depending on the preference of the users.

Another advantage is that the users (advertising target persons) ordering gifts in accordance with their preference spend much more time with the company's articles than when receiving a common business present. First, there is an active selection of business articles. Second, there is a motivation to spend time with the selection.

It is preferred that at least two of said plurality of products have different first values, i. e. the users have a choice between products of different values. So the user may select an expensive present or a number of cheaper presents. Particularly, the second value may be larger than at least one of the first values or each of said first values. Otherwise, the owner of the voucher will be frustrated when having none or little option to select. There should be as many options as possible for each of the users. I. e. there is an option for a user to select any one of the articles offered in the web system (area) accessed by the user.

In a preferred embodiment a data processing program stored on the web system is used to provide the various interfaces and data processing steps. This program may compromise several subprograms, which are stored in different parts of the web system, e.g. a subprogram on the customer station providing the interface, data processing and sending necessary for the customer interaction.

The present invention is not limited to the allocation of business gifts, but may be applied in all allocation processes wherein it is useful that the recipient (user) makes a selection of items to be allocated to him/her. Particularly, the system and method according to the invention present a bonus or reward point system which may be used in any suitable application.

### BRIEF DESCRIPTION OF THE DRAWINGS

For a better understanding of the invention reference will now be made to the accompanying drawings.
- Figure 1: illustrates a schematic view of a web system according to the invention;
- Figure 2: illustrates a platform comprised in the web system according to figure 1; and
- Figure 3: illustrates a flow chart showing the method steps of a method according to the invention.

### DETAILED DESCRIPTION

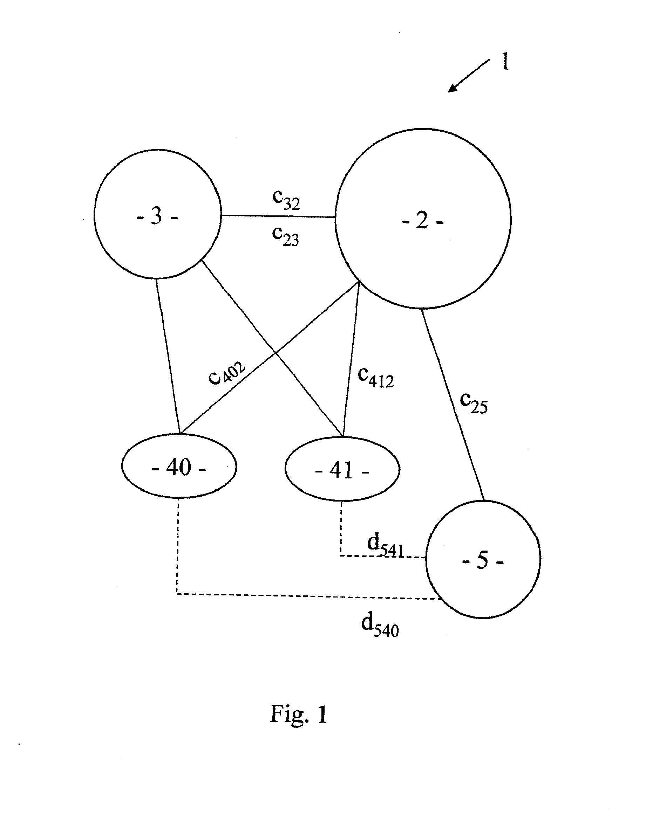

Reference is made to Figure 1 showing a schematic view of a web system 1 according to the invention. The web system 1 may be a network, e. g. a global network like the internet, or a part thereof, comprising a web platform 2, a commercial customer's user station 3, advertising target stations 40 and 41, and a product provider 5.

The elements 2, 3, 40, 41 and 5 of the web system 1 are connected through wiring or wireless. Thus the customer's user stations 3 and/or the advertising target stations 40 and 41 may be stationary (e. g. personal computers) or mobile (e. g. mobile phones). There may be direct connections or indirect connections between particular elements of the system 1 depending on the embodiment of the method selected for operating the system 1.

The web platform 2 is operated by a provider who offers a service and a corresponding method according to the invention. The web platform 2 and the functionality thereof will be described later. The web platform 2 is connected to one or a plurality of commercial users' stations 3 through a first connection c23, c32 as well as to advertising target stations 40 and 41 through second connections c402, c412. It is also connected to the product provider 5 through a third connection c25. The product provider 5 may be considered as part of the web platform 2 or a separate element connected with the web platform 2.

The commercial customer's user station 3 is an interface allowing access to the web system 1. The commercial customer's user station 3 is connected to the web platform 2 through the first connection c23, c32. A commercial customer may log in the web platform 2 and order vouchers for certain goods via the user station 3. The commercial customer's user station 3 may (as shown in Figure 1) or may not be connected to a plurality of advertising target stations 40 and 41, depending on the particular embodiment of the method according to the invention. The commercial customer's user station 3 may also be operated by a private user, but the focus is set on use by commercial enterprises.

The advertising target stations 40, 41, ... are connected to the web platform 2 through the second connections c402 and c412, respectively. They may (as shown in Figure 1) or may not be connected to the commercial customer's user station 3. Advertising target persons enter data and receive data through a corresponding advertising target station 40, 41, ...

The product provider 5 is connected to the web platform 2 through the third connection c25. There is no need that the product provider 5 is connected to the commercial customer's user stations 3 and the advertising target stations 40, 41,... Therefore, the product provider 5 may be integrated in the web platform 2. The dashed lines d540 and d541 indicated in Figure 1 do not represent connections between the elements 5 and 40, 41, but indicate delivering goods to advertising targets 40 and 41, respectively.

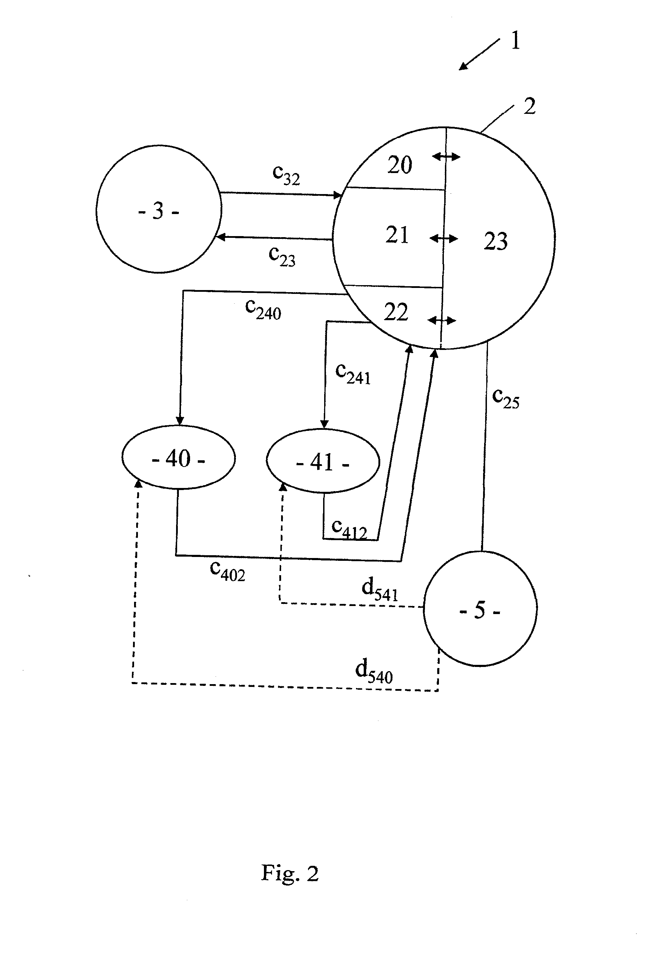

Figure 2 illustrates some details of the web system 1 and the web platform 2 in detail. The functionality of the system 1 will be shown by means of Figure 2.

The web platform 2 includes a voucher definition and order system 20, a voucher generation system 21, goods definition and order system 22, and a processing unit 23.

A commercial user may enter an order of vouchers in the commercial customer's user station 3. The order includes a definition of the goods which may be ordered when presenting the voucher. According to the invention, the goods may be personalised and individualised, respectively, by including e. g. a logo of the commercial user (company) to be printed on the product. For example, a company may want to distribute cups with a logo of the company printed thereon, to advertising targets. Then the commercial user enters a design for the cup. The web platform 2 may provide product suggestions and specimen for design options. Afterwards, the commercial user enters a number of vouchers to be ordered and (optionally) contact data, like addresses, of the advertising targets. Then the order including the voucher definition, number of vouchers and (optionally) contact data are sent to the voucher definition and order system 20 through a connection (c32). The order options may be various. So the commercial customer 3 may select that the vouchers would be sent to the advertising targets directly by the provider of the web platform 2 or provided to him for further processing. The web platform 2 may return a confirmation of the order through the connection (c23).

The data are processed by the processing unit 23 and corresponding vouchers are generated in the voucher generation system 21. The vouchers may be printed vouchers or any virtual vouchers provided e. g. in the form of e-mails including a link to the web platform 2 and an access code that allows selection of goods as well as ordering of goods by the owner of the voucher.

The definition of the vouchers allows many other options. So a commercial user may select different items making reference to the company and offer them to an advertising target person presenting a particular voucher. Different groups of advertising target persons may obtain different vouchers entitling to ordering different goods, selection among different sets of goods, ordering for a different value etc. Another option is to offer different designs or design variants of a product, e. g. different colours of a product, to be selected by the advertising target persons.

The vouchers may be sent to the advertising target persons directly or via the commercial customer station 3. In the present embodiment vouchers are sent to advertising target stations 40 and 41, respectively, via connections c240 and c241, respectively.

In a next step each of the advertising target persons may order goods via advertising target stations 40 and 41 by sending an order corresponding to their respective voucher to the goods definition and order system 22. The goods definition and order system 22 has the function of receiving orders from advertising target stations 40, 41 via connections c402 and c412, respectively. The advertising target stations 40, 41 may be mobile stations, like mobile phones, or stationary devices, like personal computers. The connections c402 and c412 may be provided by wiring or wireless.

There may be a further function of the goods definition and order system 22. This function is optionally provided in the web platform 2, or the function may be selected by the commercial customer 3 optionally in the definition of vouchers. It is that the advertising target persons have the possibility of personalising or individualising the goods they order in the web paltform 2. For example, an advertising target person, via an advertising target station 40, may enter his/her name to be printed on the product, in addition to the company's logo included by the commercial user 3. Another example is that the advertising target person, via an advertising target station 40, uploads image data or text data referring to images/text to be included in the design of the product. Generally, in this embodiment of the invention, the advertising target person has influence on the design of the product, i. e. under predetermined aspects he may influence the appearance of the product to adapt it according to his/her individual preference.

In another particular example, the provider of the web platform 2 receives an order from a commercial customer 3 to provide four individualised items. Each item has a value, e. g. V1 = 1 $, V2 = 5 $, V3 = 7.50 $ and V4 = 10 $, respectively, attributed thereto. The Values V may, instead of being expressed in monetary units, be expressed as bonus points or arbitrary units.

A voucher prepared for a particular group of advertising target persons comprises a code allowing access to the web platform 2. Additionally, a password may be provided. Data like advertising target person's name, address, and/or access area for accessing the web platform 2 may be linked with the code and stored in the web platform 2. Furthermore, a value V = 13 $ is attributed to the code of voucher.

When entering the code in a log in window access to a predetermined web platform area is granted to a user (advertising target person) entering the code. The user accesses the area of the web platform 2 by entering a code and/or a password in a user access station.

The advertising target person has a choice between products. The person may select a set or combination of products. However, the value of the set of products must not exceed the value V of the voucher. For example, the user may select a combination of products having values V1 and V3, but not a combination of products having values V3 and V4. It may be allowed or it may not be allowed to order more than one unit of the same product.

After ordering products by the advertising target persons in the goods definition and order system 22, the order is processed in process unit 23 and the goods are ordered from the product provider 5. The product provider 5 may be an internal provider included in the system 2 or an external provider. In a preferred embodiment, as shown in Figure 2, the product provider 5 is connected to the web system 2 through a connection c25 in order to receive the orders. The connection may be of any kind. In a less preferred embodiment of the invention the product provider 5 is not included in the web system 1 according to the invention.

The product provider 5 produces the products ordered by the advertising targets 40, 41 and delivers them to the respective advertising target person (d540, d541). The delivery may be a direct delivery to the advertising target persons or a delivery via another element of the system, e. g. via the commercial customer.

A further step included in the system is invoicing of the commercial customer 3 by the web system, after the orders have been received from the advertising target stations 40, 41. In another embodiment of the invention, invoicing may be initiated any time after receipt of the voucher orders by the commercial customer 3.

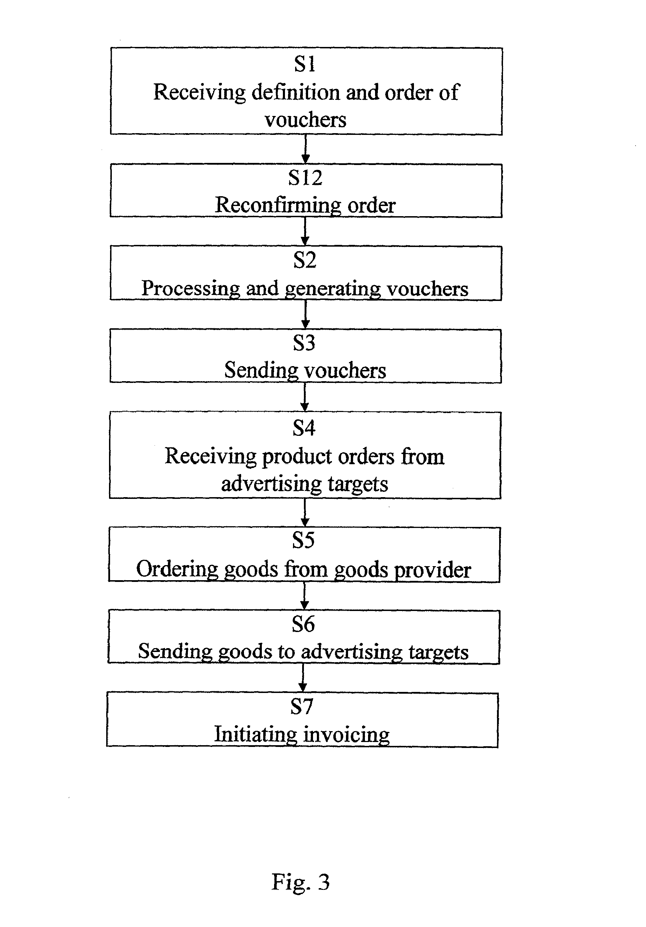

Figure 3 illustrates a flowchart of a method according to the invention.

In a first step S 1 a web platform provider receives a definition and order of vouchers in the web platform 2. Thus, a customer, particularly a commercial customer like a company, logs in the web system 2. The web platform 2 provides a user accessible area for entering different data, e. g. number of vouchers, advertising target persons' data to be included in the vouchers, products, product designs, design samples etc. for defining the goods to be obtained when converting the voucher. Particularly, the commercial customer enters design options referring to the commercial customer's business, e. g. a logo of the company. After having entered all necessary data the order is sent to the web platform 2 or confirmed after being generated within the web platform 2. The web platform 2 may send a return confirmation of the order (step S 12).

In a second step S2 the voucher definition and order data is processed in the web platform, and corresponding vouchers are generated.

The vouchers are sent to the advertising target persons in step S3. They may be sent to the advertising targets directly or they may be sent to the commercial customer first. The vouchers may be sent electronically or via regular mail

In a step S4 product orders are received from the advertising target persons who want to convert their voucher in respective goods. In a preferred embodiment when converting the voucher the advertising target person may have more or less options to determine the design of the products he would like to obtain, e. g. the colour thereof. He may even upload a text or design to be imprinted in the product.

In a next step S5 the web platform orders the products requested by the advertising target persons from a goods provider. The web platform may at the same time provide receivers' (advertising target persons') data (addresses) required for sending the goods ordered by a respective advertising target person to the respective receiver.

The goods provider produces the goods and provides them to the respective advertising target persons in step S6. The products may be sent directly to the advertising target persons or via the web platform and/or the commercial customer. From that time, the goods may be treated like conventional business gifts, i. e. they may be gift-wrapped, a card may be sent with the gift, etc. However, care has to be taken that the correct receiver receives the goods as ordered. In step S7 invoicing is initiated, either by the web platform or by the goods provider. An invoice is sent to the commercial customer who ordered the vouchers.

In this way, business gifts may be provided easily. The web platform is a service provider for making it easy for a commercial user to order and distribute a large selection of goods/designs to his customers for advertising purpose by means of a voucher system.

Furthermore, the system may be used by any commercial customer who deals with credit point systems or reward point systems. For example, such a commercial customer may order vouchers through in the system 1 form the web platform 2 as described above and provide them to their customers whenever the have a certain number of reward points. Alternatively, the customers of the commercial customer may collect their reward points and convert them directly by entering the web platform 2. I. e. conventional reward point systems may be operated by means of the system and method, respectively, according to the present invention.

## Claims

1. A web system, comprising:
a web platform;
at least one customer station;
a first connection between said web platform and said at least one customer station;
a plurality of recipient stations; and
a second connection between said web platform and said plurality of recipient stations;
wherein
said web platform includes
a goods customizing and voucher definition and order system for receiving definition, selection and order data for goods and vouchers from said customer station,
a voucher generation system for generating vouchers according to said definition, selection and order data,
a goods order system for receiving orders of goods from said recipient stations, according to a voucher presented through said respective recipient station, and
a processing unit for processing data provided by said voucher and goods definition, selection and order system and said goods order system.

2. The web system of claim 1, wherein said definition, selection and order system is configured for receiving definitions of the kind of goods and the design of goods to be ordered through the goods order upon presentation of a particular voucher.

3. The web system of claim 2, wherein said definition, selection and order system is configured for receiving definitions of design options with respect to goods to be ordered through the goods order system according to said respective voucher, wherein the design options may be selected by an recipient person when ordering goods in said goods order system via one of said recipient stations.

4. The web system of claim 3, wherein said design options comprise entering, through one of said recipient stations, individually selected images or text and personal images or text, respectively, through said goods order system.

5. The web system of claim 1, wherein said goods order system comprises a goods definition system, wherein, through one of said recipient stations, goods definitions may be selected and determined, respectively, for ordering goods according to personal preferences of a recipient person.

6. The web system of claim 1, comprising:
a goods provider, wherein said goods provider provides goods ordered through said recipient stations.

7. The web system of claim 6, wherein said goods provider is connected to said web platform via a third connection for receiving goods definition data and order data from said web platform.

8. A method of providing goods using a web system, comprising the steps:
a) receiving a definition and an order data for vouchers and a definition and selection data for goods from a customer in a voucher and goods definition, selection and order system;
b) processing said definition, selection and order data, and generating vouchers;
c) sending said vouchers to respective recipients.
d) receiving product orders by said recipients; and
e) ordering products requested by the recipients from a goods provider.

9. The method of claim 8, wherein said web system provides a user accessible area for entering at least one of a number of vouchers to be ordered, recipients' data to be included in the vouchers, products, product designs, and design samples, for defining the goods to be obtained when converting the voucher.

10. The method of claim 8, wherein the product orders in step d) can include a definition of at least some so far undefined aspects of the design of the product.

11. The method of claim 10, wherein said definition can include an uploaded text or an uploaded design to be imprinted on the product.

12. The method of claim 8, wherein ordering products in step e) includes providing data of recipient persons required for sending the goods ordered by a respective recipient person to the respective recipient person.

13. The method of claim 8, wherein the method includes a step f) producing the goods according to a respective recipient's order and providing them to the respective recipient.

14. The method of claim 8, wherein said voucher includes at least a code that allows selection of particular goods and ordering of goods in accordance with the voucher.

15. A data processing program storable or stored in the web system according to one of the claims 1 to 7 for allowing the distribution of goods from a range of goods selected by a customer among a group of recipients, wherein the recipients only receive products selected by the recipients and wherein only selected products are ordered by the customer and/or manufactured, comprising:
a subprogram a) for realizing an input interface for goods customization and voucher definition and order by the customer
a subprogram b) for processing the input from v) and generating vouchers, sending orders for the vouchers and optionally sending product selection and design information to a goods provider
a subprogram c) for realizing an input interface for goods definition and orders by the recipients and for sending said definitions and orders and information necessary for sending the goods to the goods provider
a subprogram d) for generating and sending at variable process steps of the other subprograms confirmation, invoice or other information to the customer, recipient or goods provider.
